# EUROPÄISCHE PATENTANMELDUNG

(11) **EP 0 578 281 A1**
(43) Veröffentlichungstag der Anmeldung: **12.01.1994**
(21) Anmeldenummer: 93113872.1
(22) Anmeldetag: 06.06.1990
(51) Int. Cl.: G09F 3/00

(54) **Einschlagvorrichtung für Signierelemente zum Kennzeichnen bzw. Numerieren von Holz, insbesondere von Baumstämmen**

(62) Teilanmeldung aus: 90110687.2
(71) Anmelder: Latschbacher, Kajetan, A-4484 Kronstorf (AT); Latschbacher, Klaus, Dipl.-Ing., A-4484 Kronstorf (AT)
(72) Erfinder: Latschbacher, Kajetan, A-4484 Kronstorf (AT); Latschbacher, Klaus, Dipl.-Ing., A-4484 Kronstorf (AT)
(74) Vertreter: Magenbauer, Rudolf, Dipl.-Ing.

(57) **Zusammenfassung**

Es wird eine Einschlagvorrichtung für Signierelemente zum Kennzeichnen bzw. Numerieren von Holz, insbesondere von Baumstämmen, vorgeschlagen, die mit einem Schlagkopf (40) versehen ist, an dem ein Signierelement derart lösbar anbringbar ist, daß sein mindestens eines Befestigungsteil in Schlagrichtung vom Schlagkopf (40) wegragt. Für jedes Befestigungsteil ist mindestens ein Schneidelement (50) vorhanden, das in seiner Ausgangsstellung dem Befestigungsteil mit seiner Schneidpartie (51) vorgelagert ist, welche Schneidpartie (51) bei entgegen der Schlagrichtung (43) auf sie wirkender Kraftbeaufschlagung seitlich und insbesondere gleichzeitig entgegen der Schlagrichtung aus dem Schlagweg des Befestigungsteils und insbesondere auch des Signierkörpers herausbewegbar ist, derart, daß bei der Durchführung eines Signierschlages zunächst die Schneidpartie (51) eine insbesondere schlitzförmige Aufnahmevertiefung in das zu signierende Holz einbringen kann, um sich im weiteren Verlauf der Schlagbewegung aus dem genannten Schlagweg zu entfernen, wobei und/oder wonach das Befestigungsteil in die hergestellte Aufnahmevertiefung eindringt.

## Beschreibung

Die Erfindung betrifft eine Einschlagvorrichtung für Signierelemente zum Kennzeichnen bzw. Numerieren von Holz, insbesondere von Baumstämmen, nach der Gattung des Hauptanspruchs.

Signierelemente, die häufig auch als sogenannte Signierplättchen bezeichnet werden, verwendet man, um Holz mit einer bleibenden Signatur zu versehen, so daß eine nachfolgende Manipulation des Holzes unter Berücksichtigung der Signatur erfolgen kann. Beispielsweise kann mit den Signierelementen eine Durch numerierung von Holzabschnitten gefällter Bäume erfolgen, um die Zusammenstellung von an Abnehmer abzugebende Liefereinheiten ohne nochmalige Datenerfassung zu ermöglichen. Zum Einschlagen derartiger Signierelemente ist aus der D-U-89 04 284 ein Hammer bekannt, der auf einer Seite eine Bohrung zur Aufnahme eines stäbchenförmigen Signierelements besitzt, die die Einschlagtiefe des Stäbchens vorgibt, wobei auf der anderen Seite ein Dorn vorgesehen ist, der zum Vorschlagen, z.B. bei gefrorenem Holz, dient. Diese bekannte Einschlagvorrichtung eignet sich zum einen nur für stäbchenförmige Signierelemente, und zum anderen ist das Vorschlagen mit der einen Seite und dann das Einschlagen mit der anderen Seite des Hammers umständlich und wenig komfortabel.

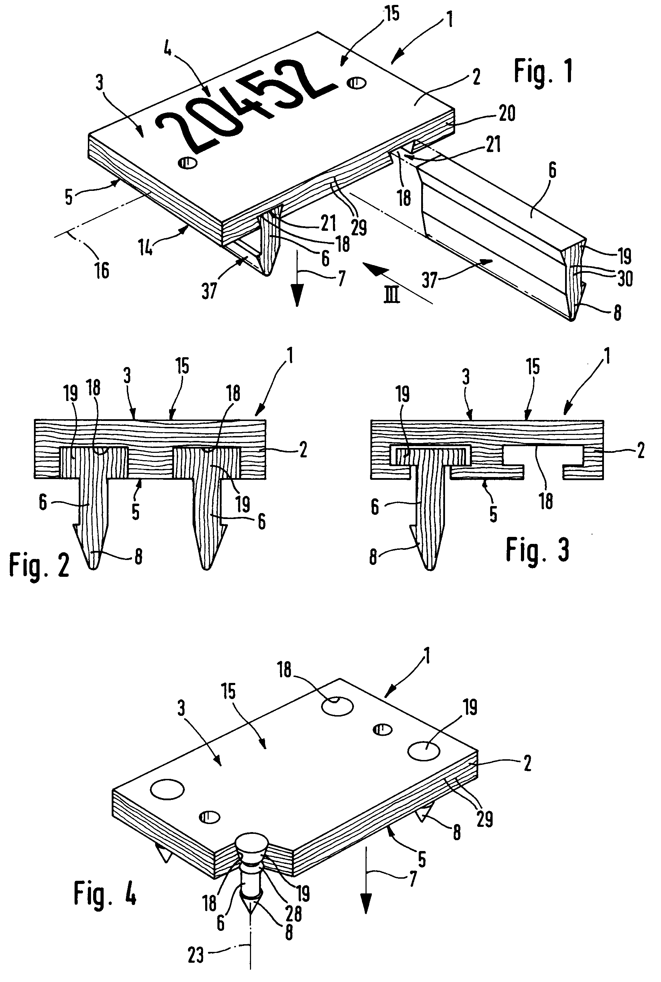

Der Erfindung liegt daher die Aufgabe zugrunde, eine Einschlagvorrichtung für Signierelemente der eingangs genannten Gattung zu schaffen, die bei einfacher und komfortabler Anwendung auch für andere Arten von Signierelementen geeignet ist, wie sie beispielsweise in den Fig. 1 bis 7 der vorliegenden Anmeldung beschrieben sind.

Diese Aufgabe wird erfindungsgemäß durch die kennzeichnenden Merkmale des Anspruchs 1 gelöst.

Mit dieser Einschlagvorrichtung können auch unterschiedlich gestaltete plättchenförmige Signierelemente in hartgefrorenem Holz beschädigungsfrei verankert werden, wobei es sich um Signierelemente aus Holz oder aus anderem Material, wie Kunststoff oder Metall, handeln kann. Die erforderliche Schlagkraft wird deutlich reduziert, und es können insbesondere auch Signierelemente mit mehreren Befestigungsteilen beschädigungsfrei in das Holz eingeschlagen werden.

Durch die in den Unteransprüchen aufgeführten Maßnahmen sind vorteilhafte Weiterbildungen und Verbesserungen der im Anspruch 1 angegebenen Einschlagvorrichtung möglich.

Die Erfindung wird nachfolgend anhand der beiliegenden Zeichnung näher erläutert. Darin zeigen jeweils in vergrößerter Darstellung:
- Fig. 1: eine erste Bauform eines Signierelementes in perspektivischer Darstellung, wobei ein Befestigungsteil in vom Signierkörper getrennten Zustand abgebildet ist,
- Fig. 2 und 3: Ausführungsformen von Befestigungsarten zwischen den Befestigungsteilen und dem Signierkörper in einer Vorderansicht entsprechend Pfeil III aus Fig. 1,
- Fig. 4: eine weitere Ausführungsform eines aus separaten Teilen bestehenden Signierelementes in perspektivischer Darstellung, wobei der eine Eckenbereich zur Darstellung der Befestigungsform des Befestigungsteiles aufgebrochen ist,
- Fig. 5: ein Signierelement mit bevorzugter Anbringungsweise der Befestigungsteile,
- Fig. 6: einen als Schichtkörper ausgestalteten Signierkörper in perspektivischer Darstellung ohne Abbildung von Befestigungsteilen,
- Fig. 7: ein einstückiges, leistenförmiges Signierelement,
- Fig. 8: eine Einschlagvorrichtung zum Signieren von Holz mit Signierelementen in Seitenansicht, teilweise aufgebrochen, als erstes Ausführungsbeispiel der Erfindung,
- Fig. 9: eine Vorderansicht der Einschlagvorrichtung aus Fig. 8 mit Blickrichtung gemäß Pfeil IX,
- Fig. 10: einen Querschnitt durch den Schlagkopf der Einschlagvorrichtung aus Fig. 8 gemäß Schnittlinie X-X,
- Fig. 11: ein weiteres Ausführungsbeispiel der Einschlagvorrichtung in Seitenansicht und in zwei verschiedenen Ebenen, teilweise aufgebrochen,
- Fig. 12: die Einschlagvorrichtung aus Fig. 11 in Vorderansicht mit Blickrichtung gemäß Pfeil XII und
- Fig. 13: einen Querschnitt durch den Schlagkopf der Einschlagvorrichtung aus Fig. 11 gemäß Schnittlinie XIII-XIII.

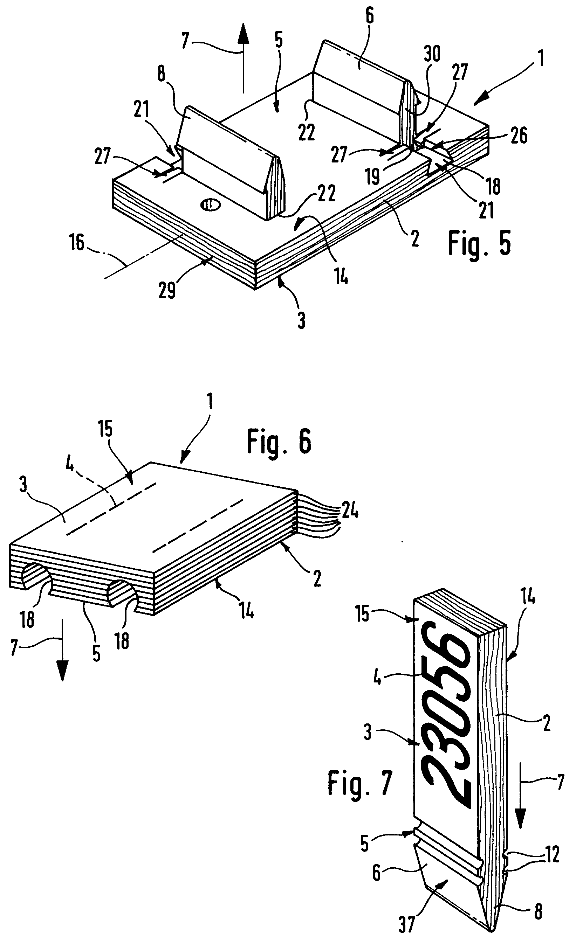

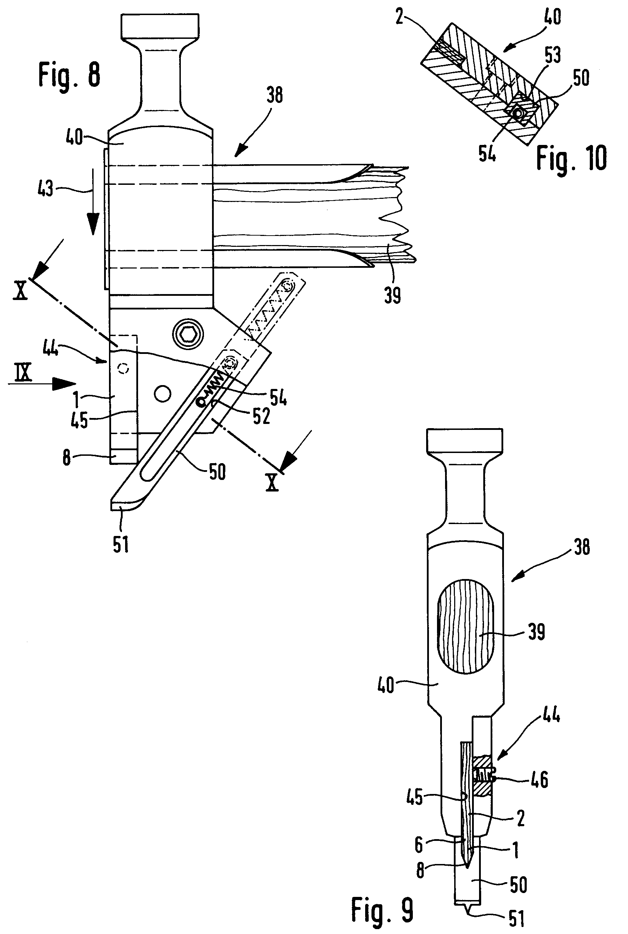

Die in den Fig. 8 bis 13 dargestellten Einschlagvorrichtungen sind Ausführungsbeispiele der vorliegenden Erfindung. Sie dienen zum Einschlagen von Signierelementen in Holz, insbesondere in Baumstämmen od.dgl. oder Teilen von diesen. Solche Signierelemente sind in den Fig. 1 bis 7 beispielhaft dargestellt, wobei die Einschlagvorrichtungen auch für andere bekannte Signierelemente geeignet sind. Jedes dieser Signierelemente verfügt über einen Signierkörper , der bei allen dargestellten Ausführungsformen plättchen- oder plattenförmig ausgebildet ist. Jeder Signierkörper 2 verfügt über eine Signaturseite 3, an der eine noch zu erläuternde, in den Fig. 1 bis 7 beispielhaft angedeutete Signatur 4 angeordnet ist. An einer Befestigungsseite 5, die sich bei den Fig. 1 bis 6 an der der Signaturseite entgegengesetzten Signierkörperseite befindet, während sie in Fig. 7 einem Randbereich des Signierkörpers zugeordnet ist, ist mindestens ein Befestigungsteil 6 angeordnet, wobei es sich zweckmäßigerweise wie in den Fig. 1 bis 6 um mehrere solcher Befestigungsteile handelt. Die Befestigungsteile 6 sind im fertigen Zustand des jeweiligen Signierelements 1 so am zugeordneten Signierkörper 2 fest angeordnet, daß sie von diesem in durch Pfeil 7 angedeutete Befestigungsrichtung abstehen bzw. wegragen. Die Verbindung zwischen den Befestigungsteilen 6 und dem jeweiligen Signierkörper 2 ist vorzugsweise starr.

Zum Signieren eines Holzteils wird das jeweilige Signierelement 1 mit den freien, vom Signierkörper 2 wegweisenden Endbereichen - den Verankerungsenden 8 - seiner Befestigungsteile 6 mit Hilfe der später beschriebenen erfindungsgemäßen Einschlagvorrichtungen in das Holzteil eingeschlagen, wo sie fest verankert bleiben. Nachfolgend kann man anhand der Signaturen 4 der einzelnen Signierelemente 1 eine problemlose Zuordnung des gekennzeichneten Holzes zu bestimmten Vorgaben treffen.

Um eine sichere Verankerung der Signierelemente 1 an den zu signierenden Hölzern zu gewährleisten, können die Befestigungsteile 6 insbesondere an ihren Verankerungsenden 8 widerhakenförmig geriffelt oder gerillt oder aber zahn- bzw. sägezahnförmig ausgestaltet sein, wie dies bei allen dargestellten Ausführungsbeispielen der Fall ist.

Bei den abgebildeten Signierelementen sind die der Signaturseite 3 und der entgegengesetzten Seite zugeordneten Signierkörper-Oberflächen 15, 14 zumindest im wesentlichen eben. Die Signaturkörper sind daher besonders einfach herzustellen.

Nun sollen die abgebildeten Signierelemente 1 im einzelnen betrachtet werden.

Die Signierelemente 1 gemäß den Fig. 1 bis 6 sind mehrstückig ausgebildet, wobei der jeweilige Signierkörper 2 und die vorhandenen Befestigungsteile 6 vorzugsweise fest miteinander verbundene, ursprünglich separate Holzbauteile sind. Die Befestigungsteile 6 sind bei den Ausführungsbeispielen der Fig. 1 und 3 bis 6 durch Preßvorgang und insbesondere unlösbar mit dem zugehörigen Signierkörper 2 verbunden, wobei in Fig. 5 durch Formschlußfixierung eine Behinderung gegen Herausfallen erfolgt. Die Befestigungsteile 6 können, wie z.B. bei Fig. 2, mit dem Signierkörper durch Verwendung von Klebstoffen, welche papier- und zellstofffreundlich sind, verbunden sein.

Die separate Ausbildung von Signierkörpern und Befestigungsteilen macht es überhaupt erst möglich, den Faserverlauf in den einzelnen Bauteilen den Anfordernissen entsprechend zu wählen, um die notwendige Strukturfestigkeit des gesamten Signierelementes zu erreichen, außer bei den einstieligen Plättchen Fig. 7, bei welchen ohnedies der Faserverlauf in Einschlagrichtung verläuft.

Eine besonders sichere Verbindung zwischen den Befestigungsteilen 6 und dem Signierkörper 2 ergibt sich, wenn am Signierkörper mindestens eine Halterungsvertiefung 18 vorgesehen ist, wobei die Befestigungsteile 6 jeweils in einer solchen Halterungsvertiefung 18 mit an ihnen einstückig angeordneten komplementären Halterungspartien 19 einsitzen und befestigt sind. Solche formschlüssigen Verbindungen sind bei allen Ausführungsformen gemäß Fig. 1 bis 6 in unterschiedlichen Varianten realisiert.

Bei den Signierelementen gemäß Fig. 1 und 5 sind in die Signierkörperfläche 14 an der Befestigungsseite 5 zwei lineare nutenförmige Halterungsvertiefungen 18 eingebracht, die mit Abstand zueinander und parallel zur Längsachse 16 des Signierkörpers 2 oder insbesondere rechtwinkelig hierzu verlaufen. Es handelt sich beim Ausführungsbeispiel gemäß Fig. 1 zweckmäßigerweise um durchgehende Halterungsvertiefungen 18, die an einander entgegengesetzten Stellen des umlaufenden schmalen Signierkörperrandes 20 ausmünden. Beim Ausführungsbeispiel gemäß Fig. 5 sind die Halterungsvertiefungen 18 nicht durchgehend, sondern enden mit ihrer einen Axialseite 22 im Holz vor Erreichen des zugeordneten Signierkörperrandes, während sie anderenends zum zugeordneten Rand hin ausmünden. Dabei ist zweckmäßigerweise vorgesehen, daß die Halterungsvertiefungen 18 zu einander entgegengesetzten Randseiten des Signierkörpers ausmünden. Die jeweiligen Mündungen stellen in allen Fällen zweckmäßigerweise Einsetzöffnungen 21 dar, über die das jeweils festzulegende Befestigungsteil 6 in die zugeordnete Halterungsvertiefung 18 von der Seite her eingesteckt worden oder einsteckbar ist. Die Befestigungsteile 6 haben eine im wesentlichen leistenförmige Gestalt, und ihre Länge entspricht z.B. wie in Fig. 1 der in Längsrichtung der zugehörigen Halterungsvertiefung 18 gemessenen Länge bzw. Breite des Signierkörpers 2. Im wesentlichen kann somit ein im wesentlichen U-förmiger Querschnitt vorhanden sein, wobei allerdings der die beiden von den Befestigungsteilen 6 repräsentierten U-Schenkel verbindende Steg seitlich überragt, um den Halterungsvertiefungen 18 je beidseits begrenzendes Holzmaterial zur Verfügung zu stellen.

Beim Signierelement gemäß Fig. 5 ist die in Einsteckrichtung der zugehörigen Halterungsvertiefung 18 gemessene Länge des jeweiligen Befestigungsteils 6 geringer als die entsprechend gemessene Längen- bzw. Breitenabmessung des Signierkörpers. Überdies ist die Länge des Befestigungsteils 6 geringer als diejenige der Halterungsvertiefung 18. Das Befestigungsteil 6 stößt axial am Ende 22 der Halterungsvertiefung 18 an, so daß auf der Seite der jeweiligen Einsetz- bzw. Einstecköffnung 21 ein unbelegter Abschnitt 26 der Halterungsvertiefung 18 verbleibt. Dort ist unmittelbar im Anschluß an das Befestigungsteil 6 eine Quetsch- bzw. Eindrückstelle 27 vorgesehen, an der der Längsrand des Abschnittes 26 zumindest an einer Vertiefungslängsseite eingedrückt ist, so daß Bestandteile des Signierkörperholzes in die Halterungsvertiefung 18 und in den axialen Entnahmeweg des Befestigungsteils ragen. Die Eindrückung ist leicht mit einem geeigneten Eindrückwerkzeug herstellbar, sie erübrigt die Verwendung zusätzlicher Fügemittel wie Klebstoff. Es wird praktisch durch Quetschung der Randöffnung das Herausfallen des Befestigungsteils verhindert.

Mithin ist das jeweilige Befestigungsteil 6 aufgrund mindestens einer am Signierkörper 2 vorgesehenen Materialquetschung oder Eindrückung in Längsrichtung der es aufnehmenden Halterungsvertiefung unbewegbar festgelegt.

Bei den Signierelementen gemäß Fig. 1 und 5 ist der Grundriß des Signierkörpers 2 im wesentlichen rechteckig und die Halterungsvertiefungen auch parallel zu einer der untereinander parallelen Randpaarungen.

Die Signierelemente gemäß Fig. 2 und 3 entsprechen hinsichtlich ihres Aufbaues demjenigen aus Fig. 1. Unterschiede bestehen lediglich in der Gestaltung der jeweils zusammenarbeitenden Paarung von Halterungsvertiefung 18 und Halterungspartie 19.

Bei den Signierelementen gemäß Fig. 1 und 5 haben die Halterungsvertiefungen 18 und Halterungspartien 19 komplementär zueinander ausgebildete Schwalbenschwanzprofile, so daß sich die Querschnittsabmessungen ausgehend von der Befestigungsseite 5 in Richtung zur Signaturseite 3 ebenfalls vergrößern. Letzteres ist auch beim Signierelement gemäß Fig. 3 der Fall, wobei die zueinander komplementären Konturen der Halterungsvertiefungen 18 und Halterungspartien 19 allerdings in Form eines T gehalten sind. Beim Signierelement gemäß Fig. 2 können die Befestigungsteile 6 von der Befestigungsseite 5 her in die Halterungsvertiefungen 18 eingesetzt werden, weil Hinterschneidungen vermieden sind. Die Halterungspartie 19 und die Halterungsvertiefungen 18 haben beide einen rechteckförmigen Querschnitt. Hier wird der Halt zweckmäßigerweise durch Klebstoff unterstützt, der den vergrößert einge - zeichneten Zwischenraum ausfüllen kann.

Darüber hinaus sind auch noch andere Querschnittsformen durchaus denkbar. Beispielsweise können die Halterungsvertiefungen 18 im Querschnitt die Form eines Kreissegementes mit einem sich über mehr als 180° erstreckenden Umfangswinkel aufweisen, wie dies in Fig. 6 andeutet ist. Die Abflachung der Segmentkontur liegt dabei in der Oberfläche 14. Der Signierkörper 2 gemäß Fig. 6 kann demnach z.B. dadurch hergestellt werden, daß in eine Holzleiste zwei parallele Bohrungen eingebracht werden, wonach eine Leistenseite über eine gewisse Tiefe flächig abgetragen wird.

Die Anzahl der Befestigungsteile 6 pro Signierelement 1 ist nicht beschränkt. Sie hängt entscheidend von der Ausführungsform der Befestigungsteile 6 ab. So sind diese Befestigungsteile 6 beim Signierelement gemäß Fig. 4 stiftförmig mit in Befestigungsrichtung 7 verlaufender Längsachse 23 ausgebildet. Es sind vier derartige Befestigungsteile 6 vorhanden, die den vier Eckenbereichen des im Grundriß in etwa rechteckförmigen Signierkörpers 2 zugeordnet sind.Bei einem nicht dargestellten Signierelement ist nur ein derartiges Befestigungsteil 6 im Zentrumsbereich des Signierkörpers vorgesehen. Bei den Halterungsvertiefungen 18 handelt es sich um von der Signaturseite 3 bis zur Befestigungsseite 5 durchgehende Öffnungen, in die die Befestigungsteile 6 mit komplementären Halterungspartien 19 fest eingesteckt sind. Es kann sich aber bei den Halterungsvertiefungen 18 durchaus auch um sacklochartige Vertiefungen handeln. Die Vertiefungen bzw. Öffnungen können sich konisch verjüngen, im welchem Fall dem Bereich geringeren Querschnitts seitens der Halterungspartie 19 ein Anschlagswulst 28 zugeordnet sein kann.

Das Signierelement gemäß Fig. 6 verdeutlicht eine weitere Gestaltungsform, wonach der Signierkörper 2 von einem Schichtkörper gebildet ist, der aus einer Vielzahl sich deckender, durch flächiges Verkleben fest miteinander verbundener Holzschichten 24 geringer Dicke besteht. Ein derartiger Schichtkörper zeichnet sich durch besonders hohe Festigkeit aus, und die Befestigungsteile 6 können je nach Bedarf in der oben beschriebenen Weise oder ebenfalls als Schichtkörper konstruiert sein.

Das Signierelement 1 gemäß Fig. 7 zeichnet sich durch eine einstückige Bauweise aus. Es handelt sich also um ein einstückiges, eventuell als Schichtkörper gestaltetes Holzelement, bei dem sowohl der Signierkörper als auch das einzige Befestigungsteil 6 aus dem vollen gearbeitet sein können. Das Befestigungsteil 6 ist von einer Randpartie des Signierkörpers 2 gebildet, so daß das Signierelement insgesamt leistenförmig mit keilförmiger Randpartie ausgebildet ist. Hier können beide Signierkörperflächen 14, 15 zur Anbringung einer Signatur dienen. Im Übergangsbereich zwischen der den Signierkörper bildenden und der das Befestigungsteil bildenden Leistenpartie sind z.B. Rillen 12 als Mittel zum Verhindern des Herausfallens aus einem signierten Holzteil vorgesehen.

Allen Signierelementen gemäß den Fig. 1 bis 6 ist vorzugsweise gemeinsam, daß der Verlauf der Holzfasern 29 im Signierkörper 2 quer zum Verlauf der Fasern 30 der ebenfalls aus Holz bestehenden Befestigungsteile 6 gerichtet ist. Dabei verlaufen die Fasern 30 in den Befestigungsteilen 6 vorzugsweise zumindest annähernd in Befestigungsrichtung 7, so daß sie zumindest im wesentlichen rechtwinkelig zu den Ebenen der bei den Ausführungsbeispielen plattenförmigen Signierkörper 2 gerichtet sind. Im Gegensatz dazu verlaufen die Fasern 29 im Signierkörper 2 quer und insbesondere rechtwinkelig zur Befestigungsrichtung 7 und bei den plättchenförmigen Ausführungsformen parallel zur Plättchen-Ebene. Beim Eintreiben eines Signierelementes in ein zu signierendes Holz werden dadurch die Befestigungsteile 6 praktisch nur auf Druck beansprucht, so daß keine Bruchgefahr besteht. Andererseits sorgt der Faserverlauf in den Signierkörper 2 für eine hohe Belastbarkeit seitens eines beim Befestigen an Holz eventuell zu verwendenden Werkzeuges. Auch dient der Faserverlauf im Signierkörper 2 einer guten Abstützung der Halterungspartien 19 im Bereich der Halterungsvertiefungen 18.

Bei alledem ist es zweckmäßig, die Halterungsvertiefungen 18 bzw. die Befestigungsteile 6 den axialen Endbereichen der Fasern 29 des Signierkörpers 2 zuzuordnen, wobei die Halterungsvertiefungen 18 zweckmäßigerweise quer zur Faserrichtung im Signierkörper 2 angeordnet sind.

Es versteht sich, daß bei der Herstellung der Signierelemente vorzugsweise solches Holz verwendet wird, das eine ausgesprochen ineinander verwachsene Fasernatur aufweist, damit das Befestigungsteil von Haus aus nicht zur Spaltung neigt. Diese Spaltneigung wird im übrigen durch den Härteprozeß der Schneide der Befestigungsteile weitgehend vermindert.

Es ist besonders vorteilhaft, wenn die aus Holzmaterial bestehenden Signierelemente zur Erhöhung der Festigkeit gehärtete Oberflächenbereiche aufweisen. Dies ist beispielsweise bei den Ausführungsformen gemäß Fig. 1 und 7 der Fall. Dort sind die Verankerungsenden 8 mit einer entsprechend gehärteten Oberfläche 37 versehen. Die Härte resultiert von aus dem Holzmaterial der Befestigungsteile 6 ausgetretenen und anschließend getrockneten holzeigenen Harzen und/oder Bindestoffen. Das Austreten dieser Holzbestandteile ist zuvor insbesondere durch Wärme erzwungen worden, die im Rahmen einer mechanischen Polier-, Glätt- und/oder Schleifbehandlung erzeugt wird.

Bei einem bevorzugten Herstellungsverfahren der Signierelemente wird man deshalb vor allem die beim Einschlagen in ein zu signierendes Holz besonders belasteten Oberflächenbereiche, insbesondere Bereiche der Verankerungsenden 8, erwärmen, wodurch aus dem Holz Harz und/oder Bindestoffe von flüssiger oder pastöser Natur austreten und sich an der Oberfläche halten. Diese ausgetretenen Holzbestandteile läßt man anschließend aushärten oder antrocknen, wodurch eine Oberflächenhärte und -glätte bzw. vergütung erzielt wird.

Die Erwärmung bewirkt man insbesondere dadurch, daß man die zweckmäßigerweise konisch zulaufenden Seitenflächen der Verankerungsenden 8 mit einer Polier-, Schleif- oder Glättvorrichtung, letztere insbesondere heiße Stahlleisten umfassend, bearbeitet und praktisch schlagartig oder schockartig erwärmt.

Im folgenden werden anhand der Figuren 8 bis 13 zwei Ausführungsformen einer Einschlagvorrichtung 38, 38' beschrieben, die speziell zum Einschlagen der vorstehend beschriebenen Holzmaterial-Signierelemente in zu signierendes Holz ausgestaltet ist. Dennoch ist sie äußerst universell verwendbar, da sie auch zum Einschlagen von bisher üblichen Signierelementen aus z.B. Kunststoff geeignet ist. Die Einschlagvorrichtung 38, 38' ist zweckmäßigerweise nach Art eines Hammers gestaltet und besitzt einen Stiel 39, an dessen einem Ende ein Schlagkopf 40, 40' angebracht ist. An diesem befindet sich eine Halteeinrichtung 44, 44' zur lösbaren Anordnung des jeweils in ein Holz einzuschlagendes Signierelementes 1. Selbiges ist derart am Schlagkopf 40, 40' anbringbar, daß seine Befestigungsteile 6 mit dem Verankerungsende 8 voraus in Schlagrichtung 43 abstehen.

Die Einschlagvorrichtung 38 der Figuren 8 bis 10 ist zur Handhabung eines leistenförmigen Signierelementes 1 derart wie anhand der Fig. 7 beschrieben geeignet. Seine Halteeinrichtung 44 umfaßt eine z.B. nut- oder schlitzförmige Aufnahme 45, in die das Signierelement 1 mit dem Signierkörper 2 voraus einsteckbar ist. Mittels eines Klemmelementes 46, z.B. in Gestalt einer am Schlagkopf 40 quer zur Längsrichtung der Aufnahme 45 verschraubbaren Klemmschraube läßt sich das Signierelement 1 derart unverlierbar festlegen, das es bei gewisser in Schlagrichtung 43 wirkender Zugbelastung dennoch aus der Aufnahme 45 freigegeben wird.

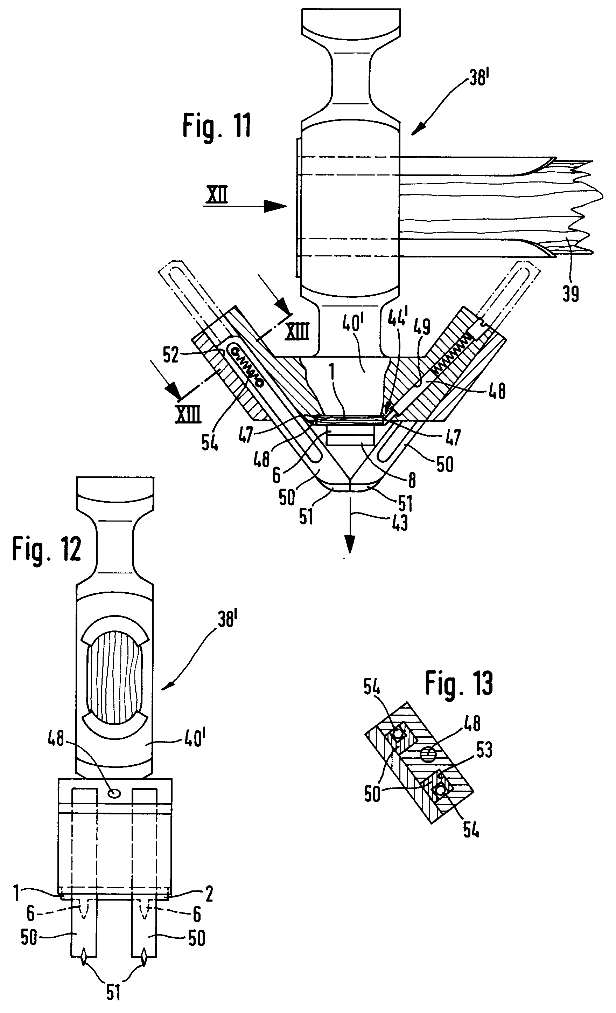

Die Einschlagvorrichtung 38' der Figuren 11 bis 13 ist zum Einschlagen von Signierelementen 1 vorgesehen, die hinsichtlich ihres Aufbaues demjenigen der anhand der Figuren 1 bis 6 beschriebenen entsprechen. Das jeweilige Signierelement 1 wird mit der Signaturseite 3 voraus an den Schlagkopf angesetzt, wo es über die Halteeinrichtung 44' fixiert wird. Letztere arbeitet drückend gegen mindestens zwei einander entgegengesetzte seitliche Randbereiche 47 des Signierkörpers 2. Beim Ausführungsbeispiel sind zwei Drückstössel 48 vorgesehen, die in einer z.B. bohrungsartigen Führung 49 verschiebbar gelagert sind und federbelastet gegen den Umfangsrand bzw. die Umfangsfläche des Signierkörpers 2 gedrückt werden. Man erhält dadurch eine reibschlüssige Halterung, die bei in Schlagrichtung 43 auf das Signierelement 1 einwirkender Zugbelastung das jeweilige Element freigibt.

Wird die Einschlagvorrichtung 38, 38' mit ihrem Schlagkopf 40, 40' in Schlagrichtung 43 gegen ein zu signierendes Holz geführt, dann dringt das angebrachte Signierelement 1 mit dem Befestigungsteil 6 sich verankernd in das Holz ein, wo es sodann verbleibt, weil es sich bei entgegengesetzter Schlagkopfbewegung aus dem Griff der Halteeinrichtung 44, 44' löst.

Sind die zu Kennzeichnenden Hölzer sehr hart und/oder vereist, dann besteht die Gefhar, daß das Befestigungsteil 6 beim Aufprall zersplittert. Damit dies nicht geschieht, verfügt die erfindungsgemäße Einschlagvorrichtung 38, 38' für jedes Befestigungsteil 6 über mindestens ein Schneidelement 50, das in seiner Ausgangsstellung dem zugeordneten Befestigungsteil eines am Schlagkopf 40, 40' angebrachten Signierelementes 1 mit einer Schneidpartie 51 in Schlagrichtung 43 vorgelagert ist.

Bei den Ausführungsbeispielen sind die Schneidelemente 50 leistenförmig länglich ausgestaltet und an einer schneidkopffesten Führungseinrichtung 52 verschiebbar geführt angeordnet. Bei letzterer handelt es sich zweckmäßigerweise um eine den Schlagkopf 40, 40' durchziehende Ausnehmung 53, die beidenends offen ist und in die ein jeweiliges Schneidelement 50 eingeschoben ist.

Zweckmäßigerweise sind die Schneidelemente in die erwähnte Ausgangsstellung vorgespannt, was bei den Ausführungsbeispielen jeweils mittels einer Feder 54 bewerkstelligt wird, die einerseits an einem der Schneidelemente 50 und andererseits am Schlagkopf 40, 40' angreift. Vorzugsweise ist sie als Rückholfeder ausgestaltet.

Der Schneidkopf 40, 40' ist zweckmäßigerweise im Bereich einer jeweiligen Führungseinrichtung 52 in deren Längsrichtung geteilt. Man erkennt dies besonders gut aus den Figuren 10 und 13, die einen Schnitt quer zur Längserstreckung der Führungseinrichtung 52 zeigen. Es ist dadurch möglich, den Schlagkopf 40, 40' zur Montage bwz. Demontage der Schneidelemente 50 und Federn 54 kurzzeitig zu zerlegen.

Die Schneidelemente 50 sind in der sie aufnehmenden Führungseinrichtung hin und her bewegbar. Hierbei ist die Anordnung derart getroffen, daß die vorhandenen Schneidpartien 51 bei entgegen der Schlagrichtung 43 auf sie einwirkender Kraftbeaufschlagung seitlich aus dem Schlagweg des zugeordneten Befestigungsteils 6 und insbesondere des gesamten Signierelements 1 heraus bewegt werden.

Im einzelnen bedeutet dies, daß bei der Durchführung eines Signierschlages der Schlagkopf 40, 40' zunächst mit den vorhandenen Schneidpartien 51 auf das zu signierende Holz auftrifft. Aufgrund der Wucht dieses Schlages bringen die Schneidpartien 51 eine insbesondere schlitzförmige Aufnahmevertiefung in das zu signierende Holz ein. Aufgrund der hierbei auf die Schneidelemente 50 entgegen der Schlagrichtung 43 ausgeübten Gegenkraft werden jedoch die Schneidpartien 51 im weiteren Verlaufe der Schlagbewegung in der oben beschriebenen Weise aus der Ausgangsstellung und aus dem Schlagweg des Signierelements herausbewegt. In der Folge werden die vorhandenen Befestigungsteile 6 mit ihrem Verankerungsende 8 in die vorgeschlagene bzw. vorgeschnittene Aufnahmevertiefung exakt eingesteckt und eingeschlagen.

Die Schneidpartien 51 führen bei der Seitwärtsbewegung vorzugsweise gleichzeitig überlagert eine Bewegung entgegen der Schlagrichtung 43 aus, so daß das Signierelement 1 unbehindert in das zu signierende Holz eingeschlagen werden kann. Die Richtung der von den Schneidelementen 50 durchgeführten Verschiebebewegung verläuft vorzugsweise in einem spitzen Winkel zur Schlagrichtung 43, die Achsen der beiden Richtungen schneiden sich in dem dem Befestigungsteil eines am Schlagkopf angebrachten Signierelementes vorgelagerten Bereich. Es ist deshalb zweckmäßig, wenn sich die Führungseinrichtungen 52 quer zur Schlagrichtung 43 im Bereich seitlich neben der vorhandenen Halteeinrichtung 44, 44' befinden.

Bei der Einschlagvorrichtung 38 der Fig. 8 bis 10 ist ein einziges Schneidelement 50 mit einer Schneidpartie 51 vorgesehen. Die nach Art einer Messerschneide ausgestaltete Schneidpartie 51 erstreckt sich in der Ausgangsstellung vor dem Verankerungsende 8 im wesentlichen quer zur Schlagrichtung 43 in einer Ebene mit dem Befestigungsteil 6.

Sofern ein Befestigungsteil 6 von relativ langer Erstreckung ist, ist es zweckmäßig, für dieses Befestigungsteil 6 zwei Schneidelemente 50 vorzusehen, die von einander entgegengesetzten Seiten her in den Schlagweg des Befestigungsteils 6 hineinragen. Jede Schneidpartie 51 ist dann für das Einbringen einer Teillänge der erforderlichen Aufnahmevertiefung zuständig. Eine entsprechende Anordnung ist bei der Einschlagvorrichtung 38' gemäß Fig. 11 bis 13 getroffen. In der Ausgangsstellung ergibt sich in Seitenansicht quer zur Schlagrichtung 43 gesehen eine etwa V-förmige Anordnung der Schneidelemente 50, wobei das Signierelement 1 im Bereich der Spitze des V zwischen den beiden V-Schenkeln angeordnet ist.

Nachdem die mit der Einschlagvorrichtung 38' handzuhabenden Signierelemente 1 regelmäßig zwei zueinander beabstandete Befestigungsteile 6 aufweisen, sind am Schlagkopf 40' die Schneidelementenpaarungen ebenfalls in zweifacher Anordnung vorgesehen, und zwar, wie dies aus Fig. 12 deutlich wird, quer zur Schlagrichtung 43 nebeneinanderliegend. Es sind somit vier Schneidelemente 50 vorhanden, wobei jeweils zwei Stück einem Befestigungsteil 6 zugeordnet sind.

Ist ein Signierschlag ausgeführt und wird die Einschlagvorrichtng 38, 38' entgegen der Schlagrichtung 43 zurückbewegt, dann geben die Halteeinrichtungen 44, 44' das je-weilige Signierelement 1 frei, so daß es am gekennzeichneten Holz verbleibt. Gleichzeitig bewegen sich die Schneidelemente 50 in ihre Ausgangsstellung zurück, die durch einen geeigneten Anschlag festgelegt sein kann.

Es versteht sich, daß die mit der Einschlagvorrichtung erzielte Erleichterung des Signiervorganges auch beim Signieren mit anderen als den vorstehend beschriebenen Signierelementen voll zur Geltung kommt. Die erforderliche Schlagkraft ist auf jeden Fall beträchtlich reduziert.

## Patentansprüche

1. Einschlagvorrichtung für Signierelemente zum Kennzeichnen bzw. Numerieren von Holz, insbesondere von Baumstämmen, mit einem Schlagkopf, an dem ein Signierelement derart lösbar anbringbar ist, daß sein mindestens eines Befestigungsteil in Schlagrichtung vom Schlagkopf wegragt, dadurch gekennzeichnet, daß für jedes Befestigungsteil (6) mindestens ein Schneidelement (50) vorhanden ist, das in seiner Ausgangsstellung dem Befestigungsteil (6) mit einer Schneidpartie (51) vorgelagert ist, welche Schneidpartie (51) bei entgegen der Schlagrichtung (43) auf sie wirkender Kraftbeaufschlagung seitlich und insbesondere gleichzeitig entgegen der Schlagrichtung aus dem Schlagweg des Befestigungsteils (6) und insbesondere auch des Signierkörpers (2) herausbewegbar ist, derart, daß bei der Durchführung eines Signierschlages zunächst die Schneidpartie (51) eine insbesondere schlitzförmige Aufnahmevertiefung in das zu signierende Holz einbringen kann, um sich im weiteren Verlauf der Schlagbewegung aus dem genannten Schlagweg zu entfernen, wobei und/oder wonach das Befestigungsteil (6) in die hergestellte Aufnahmevertiefung eindringt.

2. Einschlagvorrichtung nach Anspruch 1, dadurch gekennzeichnet, daß jedes zweckmäßigerweise mittels Federkraft (54) in die Ausgangsstellung vorgespannte Schneidelement (50) an einer schneidkopffesten Führungseinrichtung (52) bewegbar ist und hierbei insbesondere verschiebbar geführt angeordnet ist, wobei die vorgegebene Bewegungsrichtung zweckmäßigerweise in einem spitzen Winkel zur Schlagrichtung (43) verläuft.

3. Einschlagvorrichtung nach Anspruch 1 oder 2, dadurch gekennzeichnet, daß jedes Schneidelement (50) seitlich neben einer Halteeinrichtung (44, 44') für die Signierelemente (1) am Schlagkopf (40, 40') an einer Führungseinrichtung (52) schiebegelagert ist, wobei es sich ausgehend von der Führungseinrichtung (52) schräg in Schlagrichtung und gleichzeitig in Richtung des genannten Schlagweges erstreckt.
